Europäisches Patentamt

European Patent Office

Office européen des brevets

(11) Numéro de publication: **0 272 991**
**A1**

(12) **DEMANDE DE BREVET EUROPEEN**

(21) Numéro de dépôt: 87420320.1

(22) Date de dépôt: 27.11.87

(51) Int. Cl.⁴: **F 16 K 27/10**
**F 16 K 5/06**

(30) Priorité: 28.11.86 FR 8616860

(43) Date de publication de la demande:
29.06.88 Bulletin 88/26

(84) Etats contractants désignés: DE

(71) Demandeur: **Boisserand, Pierre**
**153, rue du Placyre**
**F-38500 Voiron (FR)**

**Boisserand, Denise**
**153, rue du Placyre**
**F-38500 Voiron (FR)**

(72) Inventeur: **Boisserand, Pierre**
**153, rue du Placyre**
**F-38500 Voiron (FR)**

**Boisserand, Denise**
**153, rue du Placyre**
**F-38500 Voiron (FR)**

(54) **Robinet soudé à double étanchéité.**

(57) Robinet perfectionné soudé à boisseau sphérique dont l'étanchéité interne est assurée grâce au réglage de la compression du siège (8) par un porte-siège (3) fixé intérieurement au corps (1) du robinet par vissage, de préférence.

L'étanchéité externe est obtenue, ensuite, par le soudage de la surface frontale (13) du manchon de raccordement (2) contre la surface cylindrique frontale (11) du corps (1) du robinet, et aussi contre la surface frontale (12) du porte-siège (7) préalablement vissé, de préférence.

Par l'addition de deux techniques, une double étanchéité de grande sécurité est aussi obtenue.

Fig. 1

EP 0 272 991 A1

## Description

### ROBINET SOUDÉ A DOUBLE ETANCHEITE

La présente invention a pour objet un robinet perfectionné soudé à boisseau sphérique pour fluides très corrosifs.

On sait que dans ce genre de robinet, le boisseau sphérique, orientable par l'intermédiaire d'un axe d'entraînement solidaire de la poignée de manoeuvre du robinet, prent élastiquement appui sur deux sièges opposés portés par les manchons de raccordement du robinet aux conduites d'arrivée et de départ de fluide, le déplacement angulaire du boisseau permettant alternativement d'obturer ces manchons en interdisant l'écoulement du fluide à travers le robinet ainsi fermé, ou, au contraire, de mettre en communication ces deux manchons à travers le boisseau et, selon le degré d'ouverture du robinet qui dépend de l'orientation donnée au boisseau, de régler le débit de fluide traversant le robinet.

Il est connu de constituer chacun de ces sièges par un bague de matériau plastique servant d'assise au boisseau et montée contre la partie frontale du manchon correspondant.

Ce siège de matériau plastique peut, de manière connue, être monté par compression entre la bille et les manchons plaqués contre les sorties concentriques du corps : soit par le vissage des manchons, soit à l'aide de tirants inoxydables boulonnés, soit par soudage de ces manchons.

Il est évident qu'avec ces moyens de compression du siège plastique sur le boisseau par vissage, il y a un risque de fuite vers l'extérieur, et dans la compression imprécise par soudage, il y a un risque de fuite vers l'intérieur des canalisations.

Le robinet perfectionné soudé selon l'invention s'affranchit des inconvénients qui viennent d'être évoqués, en utilisant un porte-siège fixé, par vissage de préférence, intérieurement au corps du robinet pour le réglage du siège contre la bille pour l'étanchéité interne et, ensuite, par le soudage des manchons de raccordement sur les sorties concentriques du corps du robinet et du porte-siège pour l'étanchéité externe.

Il est caractérisé par le fait qu'une double étanchéité est obtenue par l'addition des deux systèmes.

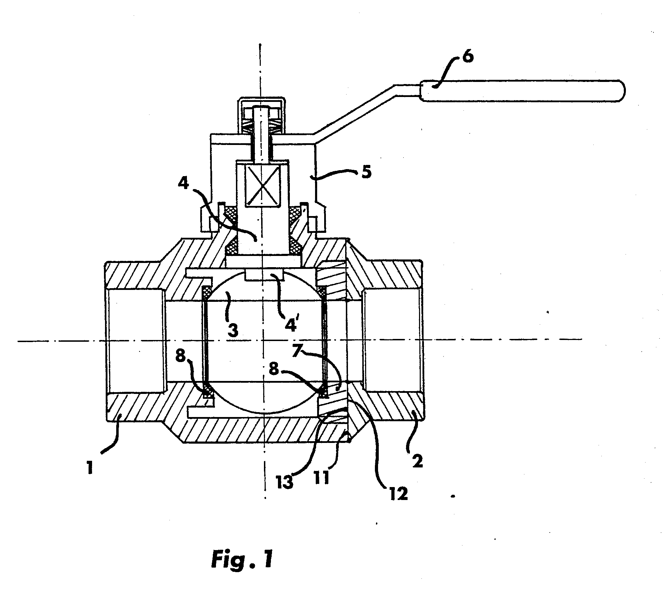

L'invention sera mieux comprise en se référant à la description suivante et au dessin annexé qui se rapporte à une forme préférée de réalisation de cette invention, citée à titre d'exemple non limitatif.

Au dessin :
La figure est une vue de côté d'un robinet selon cette forme préférée de réalisation de l'invention, moitié extérieure, moitié en coupe longitudinale.

De manière connue, le robinet comprend un corps (1) et un bloc de manoeuvre constitué d'une poignée de manoeuvre (6) et d'une douille d'entraînement (5) de l'axe (4) dont la base (4') en sabot, engagée dans une rainure du boisseau sphérique, permet la rotation de celui-ci à l'intérieur du corps (1).

Selon l'invention, un porte-siège annulaire plastique (7) vissé concentriquement à l'intérieur du corps (1) du robinet règle la compression du siège (8) qui assure l'étanchéité interne entre le boisseau sphérique (3) et le manchon de raccordement (2) dont la surface cylindrique frontale (13) est fixée par soudure contre la surface cylindrique frontale (11) du corps (1) du robinet, et aussi contre la surface cylindrique frontale (12) du porte-siège (7) préalablement vissé, de préférence, pour l'étanchéité externe.

La dite rotation permet d'obturer les manchons de raccordement dont l'un est solidaire du corps (1) et l'autre fixé par soudure à ce même corps (1) du robinet, comme indiqué ci-dessus, en interdisant l'écoulement du fluide à travers le robinet en position fermée et inversement en position ouverte.

## Revendications

1 / Robinet de type soudé pour les fluides dangereux constitué par un corps (1) et une bille (3) dont l'étanchéité interne (passage du fluide ouvert fermé) est assurée par un siège (8) plastique entre le corps (1) et son manchon de raccordement (2) et la bille (3), ainsi que l'étanchéité externe (vers l'extérieur) sont assurées par la soudure du manchon de raccordement (2) sur le corps (1), caractérisé en ce que le réglage de l'étanchéité interne (étanchéité entre la bille et le manchon de raccordement par l'intermédiaire d'un siège), non par la soudure du manchon (2) sur le corps (1), mais par un porte-siège (7) vissé (de préférence) dans le corps (1) et ensuite bloqué par la soudure du manchon (2) de raccordement sur le corps (1).

2 / Robinet selon la revendication 1 caractérisé en ce que le porte-siège (7) règlant la compression du siège est une pièce annulaire, en matériau plastique de même nature que le corps et le manchon de raccordement.

3 / Robinet selon l'une des revendications 1 et 2 caractérisé en ce que le manchon de raccordement est soudé sans compression sur le corps et le porte-siège.

0272991 .

**Fig . 1**

Office européen
des brevets

**RAPPORT DE RECHERCHE EUROPEENNE**

Numero de la demande

EP  87 42 0320

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 136 733  (FUJIWARA) <br> * En entier * <br> --- | 1 | F 16 K  27/10 <br> F 16 K   5/06 |
| A | FR-A-1 448 086  (HILLS-McCANNA CO.) <br> * En entier * <br> --- | 1 | |
| A | US-A-3 411 746  (SCARAMUCCI) <br> * En entier * <br> --- | 1 | |
| A | FR-A-2 004 046  (NEUE ARGUS GESELLSCHAFT mbH) <br> * En entier * <br> --- | 1 | |
| A | FR-A-2 244 954  (ARGUS GESELLSCHAFT) <br> * En entier * <br> --- | 1 | |
| A | FR-A-2 324 960  (ROCKWELL INTERNATIONAL CORP.) <br> * En entier * <br> ----- | 1,2 <br> - | |

**DOMAINES TECHNIQUES RECHERCHES (Int. Cl.4)**

F 16 K

Le présent rapport a été établi pour toutes les revendications

| Lieu de la recherche | Date d'achèvement de la recherche | Examinateur |
|---|---|---|
| LA HAYE | 29-02-1988 | VERELST P.E.J. |